# EUROPÄISCHE PATENTANMELDUNG

(11) **EP 4 541 774 A1**
(43) Veröffentlichungstag der Anmeldung: **23.04.2025**
(21) Anmeldenummer: 24200287.1
(22) Anmeldetag: 13.09.2024
(51) Int. Cl.: C02F 1/28, B01D 24/00, B01D 24/10, B01D 24/40, B01D 24/46

(54) **PARALLELFLUSS-FILTERBECKEN ZUR REINIGUNG VON ABWASSER**

(30) Priorität: 19.10.2023 DE 202023106057 U
(71) Anmelder: Passavant-Geiger GmbH, 65326 Aarbergen (DE)
(72) Erfinder: Zhang, Jiansan, 60486 Frankfurt am Main (DE)
(74) Vertreter: Keil & Schaafhausen Patentanwälte PartGmbB

(57) **Zusammenfassung**

Die vorliegende Erfindung betrifft ein Parallelfluss-Filterbecken zur Reinigung von Abwasser mit einem Beckenkörper (8), in dem ein Adsorptionsmittel enthaltendes Filterbett (9) vorgesehen ist, einer Rohwasser-Zulaufbaugruppe mit einem Wasserzulaufrohr (1), das mit einer vertikal verlaufend im Beckenkörper (8) angeordneten Wasserverteilungsvorrichtung (5) verbunden ist, einer Ablaufbaugruppe für gefiltertes Wasser mit einem Wasserablaufrohr (2), das mit einem vertikal verlaufenden Wassersammler (6) verbunden ist, einer Spülbaugruppe (3) zum Spülen des Filterbetts (9) und einer Steuerung. Die Wasserverteilungsvorrichtung (5) und/oder und der Wassersammler (6) ist dabei an einer Seite des Beckenkörpers (8) angeordnet. Die Spülbaugruppe weist eine im unteren Bereich des Beckenkörpers (8) angeordnete und in horizontaler Richtung von der Wasserverteilungsvorrichtung (5) und dem Wassersammler (6) beabstandet in das Filterbett (9) mündende Auslassöffnung auf, die mit einer Druckluftquelle verbunden ist, wobei die Steuerung dazu eingerichtet ist, Druckluft kontinuierlich oder intermittierend durch die Auslassöffnung in das Filterbett (9) einzuleiten.

## Beschreibung

Die Erfindung betrifft ein Parallelfluss-Filterbecken zur Reinigung von Abwasser.

Ein Filterbecken ist ein typisches Filtrationsgerät mit einer Filterschicht, das die von einem körnigen Material der Filterschicht, meist Sand, bereitgestellte Oberfläche nutzt, um feste Partikel und Kolloide im Wasser abzufangen und so das Wasser zu klären. Das Sandfilterbecken kann Verunreinigungen im Wasser mit einer Partikelgröße, die viel kleiner ist als eine Lücke im Filtermaterial, hauptsächlich durch Kontaktflockung, aber auch durch Siebfiltration und Ausfällung abfangen. Da das Sandfilterbecken viele Vorteile hat, wie z. B. eine große Entgiftungskapazität, eine lange Betriebsdauer und einen zuverlässigen Betrieb, wird es häufig bei der Aufbereitung von Speisewasser oder der weitergehenden Behandlung von Abwässern nach der biologischen Behandlung eingesetzt.

Der Betrieb von Sandfilterbecken ist hauptsächlich ein Zyklus der beiden einander abwechselnden Prozesse Filtration und Rückspülung. In bekannten Sandfilterbecken wird der Prozess der Rohwasserfiltration meist in vertikaler Richtung von oben nach unten oder von unten nach oben durchgeführt, wobei die Filtrationsfläche durch die horizontale Querschnittsfläche der Anlage begrenzt ist. Bei solchen vertikal durchströmten Sandfilterbecken wird während des Rückspülprozesses der Sandkörner der Zulauf gestoppt. Zudem ist die Kapazität der Anlage durch die Aufstellfläche begrenzt.

EP 3 552 679 B1 beschreibt ein verbessertes Sandfilterbecken, das von dem zu reinigenden Rohwasser horizontal durchströmt wird. Hierzu wird Rohwasser über ein zentrales Wasserzulaufrohr mit Auslassöffnungen in das Sandfilterbett eingeleitet und durchströmt das Sandfilterbett in radialer Richtung. Am äußeren Rand des Filterbeckens sind Wassersammler vorgesehen, die das gereinigte Wasser aufnehmen und ableiten. Aufgrund dieser Ausgestaltung fließt das Rohwasser horizontal durch das Filterbett. Hierdurch wird zunächst die Filtrationsfläche und damit die Kapazität der Anlage stark vergrößert, indem die Bauhöhe des Beckens besser ausgenutzt wird, was nicht nur die Qualität des gefilterten Wassers verbessert, sondern auch den Bedarf an Baugrundfläche reduziert. Zudem wird der Filtersand in verschiedenen Bereichen gewaschen. So lagern sich bei der Filtration nach und nach feste Verunreinigungen auf der Oberfläche der Sandkörner ab und der Verschmutzungsgrad der Sandkörner nimmt von der Wasserverteilungsvorrichtung bis zum Wassersammler allmählich ab.

Bei der Rückspülung des Filtermediums nach der EP 3 552 679 B1 wird das Reinigungswasser zunächst in den Ablaufbereich mit relativ sauberem Filtermedium eingeleitet und fließt durch das Medium zum Zulaufbereich mit relativ höher verschmutztem Filtermedium zur Zulaufeinrichtung, wo das Schmutzwasser wieder abgezogen wird, wodurch eine gründlichere Reinigung erfolgt. Für die Reinigung wird abwechselnd Luftverwirbelung und Wasserreinigung oder eine Kombination von beiden genutzt.

Aufgabe der vorliegenden Erfindung ist es, ein weiter verbessertes Filterbecken bereitzustellen, bei dem insbesondere die Reinigungsleistung verbessert wird.

Diese Aufgabe wird mit einem Parallelfluss-Filterbecken mit den Merkmalen des Anspruchs 1 gelöst. Vorteilhafte Ausführungsformen sind Gegenstand der Unteransprüche.

Ein erfindungsgemäßes Parallelfluss-Filterbecken weist einen Beckenkörper auf, in dem ein Filterbett vorgesehen ist. Eine Rohwasser-Zulaufbaugruppe mit wenigstens einem Wasserzulaufrohr, das mit wenigstens einer zumindest im Wesentlichen vertikal verlaufend im Beckenkörper angeordneten Wasserverteilungsvorrichtung zum Zuführen von Rohwasser in das Filterbett verbunden ist, und eine Ablaufbaugruppe für gefiltertes Wasser mit wenigstens einem Wasserablaufrohr, das mit wenigstens einem zumindest im Wesentlichen vertikal verlaufend im Beckenkörpers angeordneten Wassersammler verbunden ist, ermöglichen es, zu reinigendes Rohwasser in das Filterbett zu leiten und gereinigtes Wasser aus dem Filterbett abzuleiten. Dabei ist es nicht entscheidend, ob sich die Wasserverteilungsvorrichtung und/oder der Wassersammler exakt vertikal erstrecken. Vielmehr sollten sie sich jeweils über näherungsweise die gesamte Höhe des Filterbetts erstrecken, so dass das Rohwasser weitgehend parallel in horizontaler Richtung durch das Becken strömen kann. Weiter weist ein Parallelfluss-Filterbecken eine Spülbaugruppe zum Spülen des Filterbetts sowie eine Steuerung zur Einstellung der Menge und/oder Fließrichtung einer Fluidströmung durch die Rohwasser-Zulaufbaugruppe, die Ablaufbaugruppe und/oder die Spülbaugruppe auf.

Wenn die Wasserverteilungsvorrichtung zum Zuführen von Rohwasser in das Filterbett an einer ersten Seite des Beckenkörpers angeordneten ist und der Wassersammler an einer der ersten Seite des Beckenkörpers gegenüberliegenden zweiten Seite des Beckenkörpers angeordnet ist, kann das Rohwasser weitgehend parallel in horizontaler Richtung durch das gesamte Becken strömen, wodurch eine große Filtrationsfläche zur Verfügung steht. Gegenüber einer radialen Strömung des Rohwassers aus der Mitte des Filterbeckens zum Rand hin, legt das Rohwasser folglich eine vergleichsweise längere Strecke durch das Filterbett zurück, zugleich weist die Strömung über die ganze Strecke ein gleichmäßigeres Bild auf, was eine nochmals gründlichere Reinigung ermöglicht.

Erfindungsgemäß weist die Spülbaugruppe wenigstens eine im unteren Bereich des Beckenkörpers angeordnete und in horizontaler Richtung von der Wasserverteilungsvorrichtung und dem Wassersammler beabstandet in das Filterbett mündende Auslassöffnung auf, die mit einer Druckluftquelle verbunden ist. Vorzugsweise sind Auslassöffnungen im unteren Drittel, besonders bevorzugt im unteren Viertel, z.B. im unteren Zehntel, der Beckenhöhe angeordnet. Somit kann Druckluft in den unteren Teil der Spülbaugruppe eingeleitet werden, die ein Gemisch aus Luft, Filtermaterial, die am Filtermaterial anhaftenden Schmutzpartikeln und Wasser durch die Baugruppe nach oben aus dem Filterbett in eine Wasch- und Trenneinheit fördert. Hierbei wird es besonders bevorzugt, wenn die Steuerung dazu eingerichtet ist, Druckluft kontinuierlich oder intermittierend durch die Auslassöffnung in die Spülbaugruppe einzuleiten. Dies kann insbesondere auch während des Filtrationsprozesses erfolgen, so dass gleichzeitig Rohwasser gereinigt und das Filterbett gespült wird. Die Reinigungskapazität steigt hierdurch gegenüber dem bekannten Batch-Betrieb, in dem abwechselnd entweder Rohwasser gereinigt oder das Filterbett rückgespült wird.

Die wenigstens eine in das Filterbett mündende Auslassöffnung kann in einem, beispielsweise zentral angeordneten, Spülmittelrohr ausgebildet sein. In der einfachsten Ausführung kann das Spülmittelrohr unten offen sein, und die Luft in den unteren Teil dieses Rohr eingeleitet werden. Es wird jedoch bevorzugt, wenn mehrere seitliche Auslassöffnungen ins Innere des Spülmittelrohrs mündend ausgebildet sind. So können die Auslassöffnung einen Düsenkranz bilden, der vergleichsweise kleinere Luftblasen bildet.

Das Filterbett enthält vorzugsweise Aktivkohle oder ein anders geeignetes Adsorptionsmittel wie beispielsweise Sand, Bentonit, Keramikfiltermedium, Aluminiumoxid oder Kieselgel. Nach einer besonders bevorzugten Ausführungsform besteht das Filterbett aus Aktivkohle. Diese hat gegenüber dem üblicherweise als Filterbett verwendeten Sand eine weiter verbesserte Reinigungswirkung.

In dem Parallelfluss-Filterbecken kann die Spülbaugruppe ein in dem Beckenkörper angeordnetes und zumindest im Wesentlichen vertikal verlaufendes Spülmittelrohr aufweisen, das Auslassöffnungen zumindest im Bereich des unteren Endes des Spülmittelrohrs hat.

Bei weiteren Alternativen ist es auch möglich, die Druckluft von unten in den Beckenkörper per speziellen Belüftungseinrichtungen einzuleiten, um einen oxidativen bzw. aerob biologischen Prozess im Filterbett zu ermöglichen.

Die Steuerung des Parallelfluss-Filterbeckens kann dazu eingerichtet sein, in einem Filterbetrieb, Rohwasser über die Wasserverteilungsvorrichtung dem Filterbett zuzuführen und gefiltertes Wasser über den Wassersammler aus dem Filterbett abzuziehen. Dabei werden Zu- und Abfluss beispielsweise so eingestellt, dass das Rohwasser-Niveau in dem Filterbetrieb unter dem Niveau des Filterbetts liegt. Hierdurch übt das Filterbettmaterial, also hier Aktivkohle oder dgl., das über dem Rohwasser-Niveau liegt, Druck auf das darunterliegende Filtermaterial aus und kompaktiert es. Die Steuerung kann weiter dazu eingerichtet sein, in einem Rückspülbetrieb Wasser über die Wasserverteilungsvorrichtung aus dem Filterbett abzuziehen und/oder über den Wassersammler dem Filterbett Wasser zuzuführen, also die Strömungsrichtung umzukehren. Hierfür kann bereits gereinigtes Wasser verwendet werden. Dabei kann die Steuerung das Wasser-Niveau in dem Rückspülbetrieb so einstellen, dass es über dem Niveau des Filterbetts liegt. Aufschwimmende Fremdstoffe können dann von der Wasseroberfläche abgeführt werden. Dieser Rückspülbetrieb dient zudem dazu, die Wasserverteilungsvorrichtung und den Wassersammler zu reinigen, in denen sich Partikel aus dem Rohwasser absetzen können. Eine solche Rückspülung ist aber deutlich seltener notwendig als die Spülung des Filterbetts, die mit dem erfindungsgemäßen Parallelfluss-Filterbecken während des Filterprozesses stattfinden kann.

Bezüglich der Spülung und Reinigung des Filterbetts kann die Steuerung dazu eingerichtet sein, Druckluft kontinuierlich oder intermittierend durch die Auslassöffnung in das Spülmittelrohr, einzuleiten, wodurch ein Gemisch von Luft, Wasser, Schmutz und Filtermedium nach oben in die Wascheinheit gefördert wird, während gleichzeitig Rohwasser über die Wasserverteilungsvorrichtung dem Filterbett zugeführt und/oder gefiltertes Wasser über den Wassersammler aus dem Filterbett abgezogen wird, also während des Filterprozesses (kontinuierlicher Betrieb). Alternativ kann das Filterbecken so gebildet werden, dass unten im Falle eines Flachbodens eine Belüftungsgruppe ausgebildet wird, wobei über die Steuerung abwechselnd Druckluft durch eine spezielle Belüftungsgruppe in das Filterbett oder Wasser durch den Ablaufsammler in das Filterbett oder eine Kombination von beiden gleichzeitig in das Filterbett eingeleitet werden kann, und das Schmutzwasser über den Zulaufverteiler oder einen speziellen Überlauf abgezogen werden kann, ohne dass gleichzeitig Rohwasser über die Wasserverteilungsvorrichtung dem Filterbett zugeführt und ohne dass gefiltertes Wasser über den Wassersammler aus dem Filterbett abgezogen wird (Batch-Betrieb).

Die Wasserverteilungsvorrichtung und/oder der Wassersammler können eine Siebplatte, ein perforiertes Rohr, ein Spaltsieb oder jegliche Kombination aus der Siebplatte, dem perforierten Rohr und dem Spaltsieb aufweisen. Die Öffnungsgröße ist dabei vorzugsweise so gewählt, dass die Aktivkohle nicht aus dem Filterbett in die Wasserverteilungsvorrichtung und/oder den Wassersammler gelangt.

Vorzugsweise weist das Parallelfluss-Filterbecken ferner eine Wascheinheit auf, die dazu eingerichtet ist, Adsorptionsmittel, also Aktivkohle oder dgl., zu waschen, von Wasser zu trennen und/oder dem Filterbett wieder zuzuführen. Dies erfolgt beispielsweise während des Rückspülprozesses. Derart gereinigte Aktivkohle kann direkt wieder von oben auf das Filterbett aufgegeben werden.

Wenn sich in dem Parallelfluss-Filterbecken ein unterer Bereich des einem Beckenkörpers nach unten z.B. konisch verjüngt, kann die wenigstens eine Auslassöffnung für die Druckluft in dem konisch verjüngten Bereich angeordnet sein. Dies vereinfacht den Aufbau gegenüber Alternativen, bei denen mehrere Auslassöffnungen über eine größere ebene Bodenfläche eines Beckens verteilt angeordnet werden müssen, um das gesamte Filterbett spülen zu können.

Nach einer Ausführungsform kann der Beckenkörper des Parallelfluss-Filterbeckens eine im Wesentlichen rechteckige Grundform miteinander gegenüberliegenden Seitenwänden aufweisen, wobei eine oder mehrere Wasserverteilungsvorrichtungen und eine oder mehrere Wassersammler an einander gegenüberliegenden Seitenwänden vorgesehen sind. Alternativ ist es möglich, dass der Beckenkörper eine im Wesentlichen zylindrische Grundform aufweist, wobei eine oder mehrere Wasserverteilungsvorrichtungen und eine oder mehrere Wassersammler aneinander gegenüberliegenden Zylindersegmenten vorgesehen sind.

Das Parallelfluss-Filterbecken kann zusätzlich einen Sammeltank für gereinigtes Wasser als Reservoir für den Rückspülbetrieb und/oder einen Sammeltank für aus dem Rohwasser abgetrennte Partikel aufweisen.

Ausführungsformen der Erfindung werden im Folgenden unter Bezugnahme auf die Zeichnung beschrieben. Darin zeigen:
- Figur 1a und 1b: Schnittansichten eines Parallelfluss-Filterbeckens nach einer ersten Ausführungsform;
- Figur 2a und 2b: Schnittansichten eines Parallelfluss-Filterbeckens nach einer zweiten Ausführungsform;
- Figur 3a und 3b: Schnittansichten eines Parallelfluss-Filterbeckens nach einer dritten Ausführungsform;
- Figur 4a und 4b: Schnittansichten eines Parallelfluss-Filterbeckens nach einer vierten Ausführungsform;
- Figur 5a und 5b: Schnittansichten eines Parallelfluss-Filterbeckens nach einer fünften Ausführungsform; und
- Figur 6a und 6b: Schnittansichten eines Parallelfluss-Filterbeckens nach einer sechsten Ausführungsform.

Im Folgenden werden im Wesentlichen funktionsgleiche Bauteile der verschiedenen Ausführungsformen mit identischen Bezugsziffern versehen.

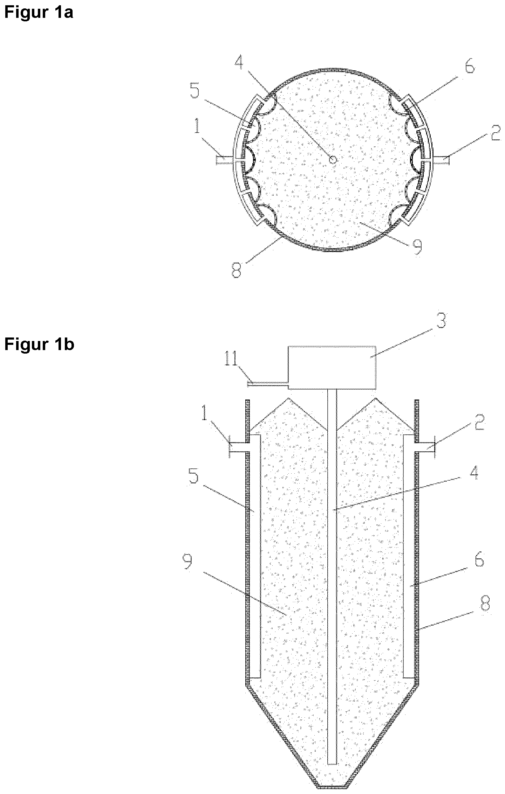

Das in den Figuren 1a und 1b dargestellte Parallelfluss-Filterbecken weist einen Beckenkörper 8 mit einer im Wesentlichen zylindrischen Grundform auf. Das untere Ende des Beckenkörpers 8 ist in dem gezeigten Beispiel konisch verjüngt ausgebildet. Auf der in Figur 1b linken Seite ist ein Wasserzulaufrohr 1 vorgesehen, durch das zu reinigendes Abwasser (nachfolgend: Rohwasser) in den Beckenkörper 8 geleitet werden kann. Der Zufluss kann mittels einer nicht dargestellten Steuerung, die auf Pumpen, Absperreinrichtungen, etc. einwirken kann, definiert gesteuert werden. Das Wasserzulaufrohr 1 ist mit einer Wasserverteilungsvorrichtung 5 verbunden, die sich entlang der Seitenwand des Beckenkörpers 8 im Wesentlichen vertikal erstreckt und eine Vielzahl von Öffnungen aufweist, durch die Rohwasser in den Beckenkörper 8 geleitet werden kann. Auf der gegenüberliegenden rechten Seite des Beckenkörpers 8 führt ein Wasserablaufrohr 2 aus dem Beckenkörper 8. Der Abfluss kann mittels der nicht dargestellten Steuerung, die auf Pumpen, Absperreinrichtungen, etc. einwirken kann, definiert gesteuert werden. Das Wasserablaufrohr 2 ist mit einem Wassersammler 6 verbunden, der sich entlang der Seitenwand des Beckenkörpers 8 im Wesentlichen vertikal erstreckt und eine Vielzahl von Öffnungen aufweist, durch die gereinigtes Wasser in das Wasserablaufrohr 2 geleitet werden kann.

In dem dargestellten Beispiel sind die Wasserverteilungsvorrichtung 5 und der Wassersammler 6 jeweils als mehrere an der Seitenwand des Beckenkörpers 8 angeordnete Halbrohre ausgebildet, die perforiert oder mit Spaltsieben versehen sein können. Die Erfindung ist nicht auf die dargestellte Anzahl, Größe und genaue Ausrichtung der Halbrohre beschränkt. Die Anzahl, Größe und Ausrichtung der Halbrohre der Wasserverteilungsvorrichtung 5 können von der Anzahl, Größe und Ausrichtung der Halbrohre des Wassersammlers 6 abweichen.

In dem Beckenkörper 8 ist zwischen Wasserverteilungsvorrichtung 5 und Wassersammler 6 ein Filterbett 9 aus Aktivkohle vorgesehen. Dieses Filterbett 9 kann sich wie dargestellt im unteren konischen Bereich und/oder im oberen Bereich über die Wasserverteilungsvorrichtung 5 und den Wassersammler 6 hinaus erstrecken. Rohwasser kann in horizontaler Richtung von der Wasserverteilungsvorrichtung 5 etwa parallel durch das Filterbett 9 zu dem Wassersammler 6 strömen und wird dabei gereinigt.

Ein mit einer nicht gezeigten Druckluftquelle verbundenes Spülmittelrohr 4 ist in dem dargestellten Beispiel zentral in dem Beckenkörper 8 angeordnet und weist in der Nähe des unteren Endes, das sich bis in den konisch verjüngten Bereich erstreckt, Auslassöffnungen ins Spülmittelrohr 4 aus. Die Steuerung kann den Durchfluss von Druckluft definiert steuern. Durch das Einleiten der Druckluft ins Spülmittelrohr 4 wird ein Gemisch von Luft, Aktivkohle samt anhaftender Partikeln und Wasser nach dem Prinzip des Lufthebers bzw. der Mammutpumpe im Spülmittelrohr nach oben in die Wascheinheit 3 gefördert, wo die Aktivkohle von anhaftenden Partikeln gereinigt und getrennt wird, und oben wieder auf den Beckenkörper 8 verteilt. Hierdurch bildet das Filterbett 9 die in Figur 1b gezeigten etwa Aufhäufungen an der Oberfläche auf.

Eine Wascheinheit 3 mit einem Abwasserablauf 11 ist oberhalb des Filterbetts 9 vorgesehen. In einem Rückspülprozess kann die Wascheinheit 3 Aktivkohle von anhaftenden Partikeln reinigen, von Schmutzwasser trennen und die Aktivkohle wieder dem Filterbett 9 zuführen.

Ein Wasseraufbereitungsprozess eines Parallelfluss-Filterbeckens weist im Wesentlichen zwei unterschiedliche Prozesse auf, nämlich den Filtrations- und Spülprozess, in dem Rohwasser in dem Parallelfluss-Filterbecken gereinigt und z.B. gleichzeitig das Filterbett gereinigt wird, und den Rückspülprozess, in dem die Wasserverteilungsvorrichtung 5, der Wassersammler 6 und das Filterbett 9 gereinigt werden.

Für den Filtrations- und Spülprozess werden von der Steuerung Ventile in der Wasserzulaufleitung 1 und in der Wasserablaufleitung 2 geöffnet, so dass Rohwasser durch das Wasserzulaufrohr 1 in den Beckenkörper 8 eintritt und dort gleichmäßig über die Wasserverteilungsvorrichtung 5 in das Filterbett 9 eingeleitet wird. Das Rohwasser fließt dann in horizontaler Richtung im Wesentlichen parallel durch das Filterbett 9, also in der in Figur 1b gezeigten Ausführungsform von links nach rechts. Während dieses Filtrations- und Spülprozesses werden große Schwebeteilchen oder Verunreinigungen im Wasser von der Aktivkohle des Filterbetts 9 in einer Schicht nahe der Wasserverteilungsvorrichtung 5 abgefangen und kleinere Verunreinigungen werden in einer weiter rechts in Figur 1b gelegenen Schicht abgelagert oder durch Adsorption an der Aktivkohle angelagert. Das derart gefilterte Wasser wird gleichmäßig durch den Wassersammler 6 gesammelt, der an der Innenwand des Beckenkörpers 1 angeordnet ist und über das Wasserablaufrohr 2 abgelassen. Das Rohwasserniveau kann dabei so eingestellt werden, dass dieses unter dem Niveau des Filterbetts 9 liegt.

Gleichzeitig kann während des Filtrations- und Spülprozesses das Filterbett 9 gereinigt werden, indem die Steuerung ein Ventil intermittierend oder kontinuierlich öffnet, das das Spülmittelrohr 4 mit der Druckluftquelle verbindet, so dass aus der wenigstens einen Auslassöffnung am unteren Ende des Spülmittelrohrs 4 Luftblasen ins Spülmittelrohr austreten. Diese steigen in dem Spülmittelrohr 4 auf und befördert damit ein Gemisch aus Luft, Filtermedium, Verunreinigungen und Wasser nach oben in die Wascheinheit 3 oben über dem Filterbett 9. Verunreinigungen und Schadstoffe werden durch die Gasphasenbewegung, die Scherkraft des Wasserstroms und die Kollision und Reibung zwischen den Aktivkohlekörnern von deren Oberflächen abgelöst, was eine zusätzliche Reinigungswirkung aufweist.

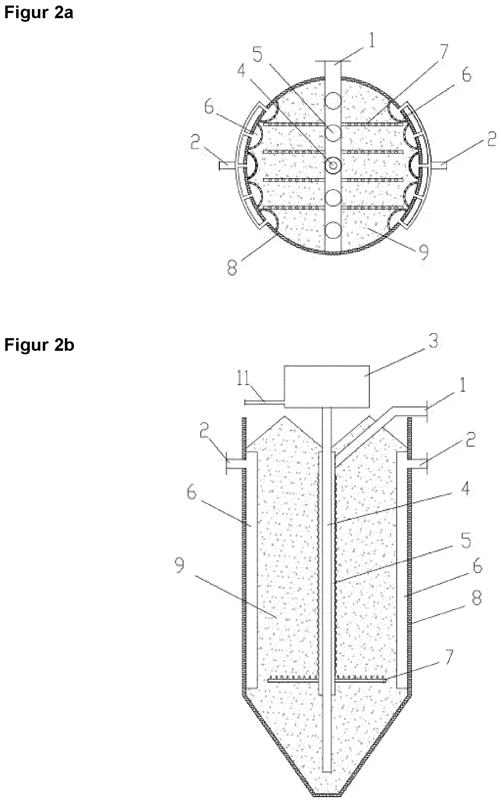

Eine zweite Ausführungsform ist in den Figuren 2a und 2b dargestellt. Bei dieser erfolgt die Zufuhr von Rohwasser in den Beckenkörper 8 über eine zentral angeordnete Wasserverteilungsvorrichtung 5 mit mehreren sich im Wesentlichen vertikal erstreckenden perforierten und/oder geschlitzten Rohren. Auf zwei einander gegenüberliegenden Seiten sind jeweils Wassersammler 6 vorgesehen, so dass eine horizontale, etwa parallele Strömung von der Mitte des Beckenkörpers 8 zu den beiden Seiten mit den Wassersammlern 6 entsteht. Dadurch verdoppelt sich noch einmal die Filtrationsfläche, was im Falle von Partikelfiltration von großer Bedeutung sein kann. Weiter ist in dieser zweiten Ausführungsform ein optionaler Belüfter 7 in dem Filterbett 9 angeordnet, wodurch zusätzlich ein aerober biologischer Abbauprozess ermöglicht werden kann.

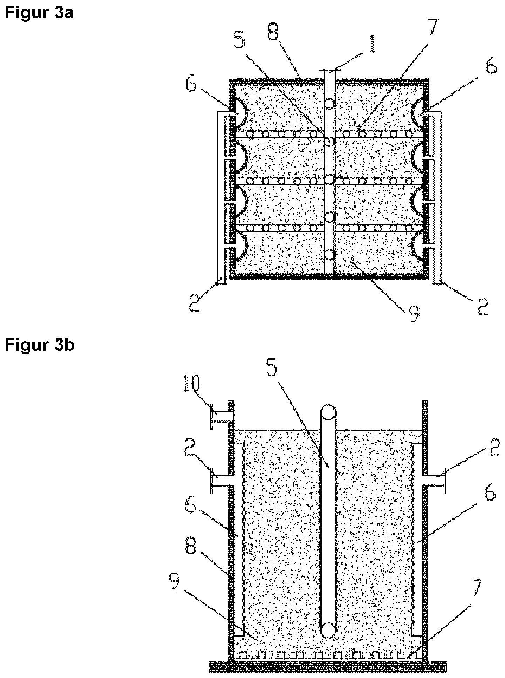

In der in den Figuren 3a und 3b gezeigten dritten Ausführungsform ist der Beckenkörper 8 im Wesentlichen rechteckig mit einem flachen Boden ausgebildet. Die Wasserverteilungsvorrichtung 5 ist ähnlich wie in der zweiten Ausführungsform zentral angeordnet, wobei wiederum zwei Wassersammler 6 aneinander gegenüberliegenden Seitenwänden des Beckenkörpers 8 ausgebildet sind. Zusätzlich ist in Figur 3b ein Überlauf 10 dargestellt, der auch bei den übrigen Ausführungsformen vorgesehen sein kann.

Für den Rückspülprozess wird Spülwasser, beispielsweise bereits zuvor gereinigtes und zwischengespeichertes Wasser, in umgekehrter Richtung zu dem oben beschriebenen Filtrations- und Spülprozess über den Wassersammler 6 in das Filterbett 9 eingeleitet und über die Wasserverteilungsvorrichtung 5 abgeleitet. Hierbei wird das Wasser derart aufgestaut, dass das Wasserniveau über dem Filterbett 9 ist. Durch die Steuerung kann über eine definierte Zeit Druckluft über die am Boden angeordneten Belüfter 7 ins Filterbett 9 eingebracht werden, wodurch eine starke Verwirbelung des Filterbetts verursacht wird, und Schmutzpartikel lösen sich vom Filtermedium ab und schwimmen nach oben oder gelangen als Schwebstoffe ins Wasser. Durch weiteres Zuführen von Wasser schwimmen die während des Spülprozesses ausgespülten Partikel auf bzw. werden aus dem Filterbett 9 über den Überlauf 10 oder den Zulaufrohr 1 ausgeschwemmt und abgelassen. Das Spülwasser kann alternativ auch zu einem Teil über die spezielle Belüftungseinrichtung 7, die jedoch so ausgebildet werden muss, dass auch Wasser zugeführt und verteilt werden kann, von unten ins Filterbett 9 eingebracht werden, und schwemmt so die abgelösten Schmutzpartikeln mit nach oben zum Überlauf 10, wodurch eine nochmals verbesserte Reinigung des Filterbetts 9 ermöglicht wird. Zudem werden durch die Umkehr der Strömungsrichtung auch der Wassersammler 6 und die Wasserverteilungsvorrichtung 5 gereinigt. Das Ausführungsbeispiel zeigt eine typische Variante des Batch-Betriebs, wobei mit Hilfe des am Boden angeordneten Belüfters 7 gegebenenfalls auch ein aerober biologischer Prozess ermöglicht werden kann.

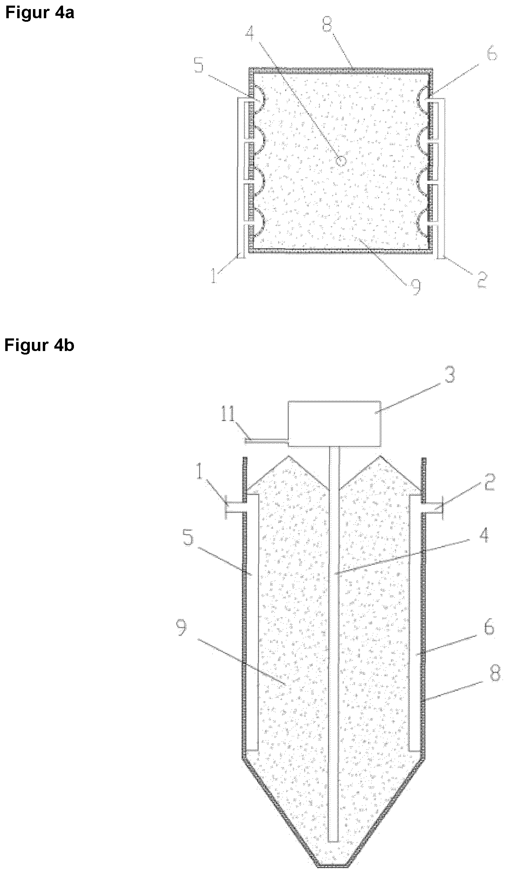

Figur 4a und 4b zeigen eine vierte Ausführungsform mit einem wiederum im Wesentlichen rechteckig ausgebildeten Beckenkörper 8, der auf der in der Figur linken Seite das Wasserzulaufrohr 1 und die Wasserverteilungsvorrichtung 5 aufweist und auf der gegenüberliegenden rechten Seite den Wassersammler 6 und das Wasserablaufrohr 2. Verglichen mit der ersten Ausführungsform passiert das Rohwasser somit bei dieser vierten Ausführungsform eine gleichmäßig lange Strecke im Filterbett 9 zwischen der Wasserverteilungsvorrichtung 5 und dem Wassersammler 6.

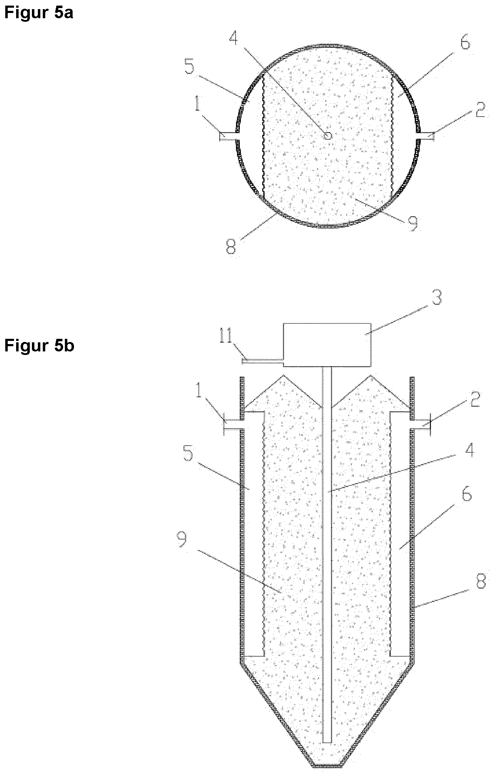

Die fünfte Ausführungsform, die in den Figuren 5a und 5b gezeigt ist, entspricht im Wesentlichen der ersten Ausführungsform, wobei die Wasserverteilungsvorrichtung 5 und der Wassersammler 6 nicht aus als Halbrohre aufgebaut sind, sondern jeweils im Wesentlichen als Zylindersegmente, so dass zwei näherungsweise parallele Wassereintritts- und Wasseraustrittsflächen entstehen.

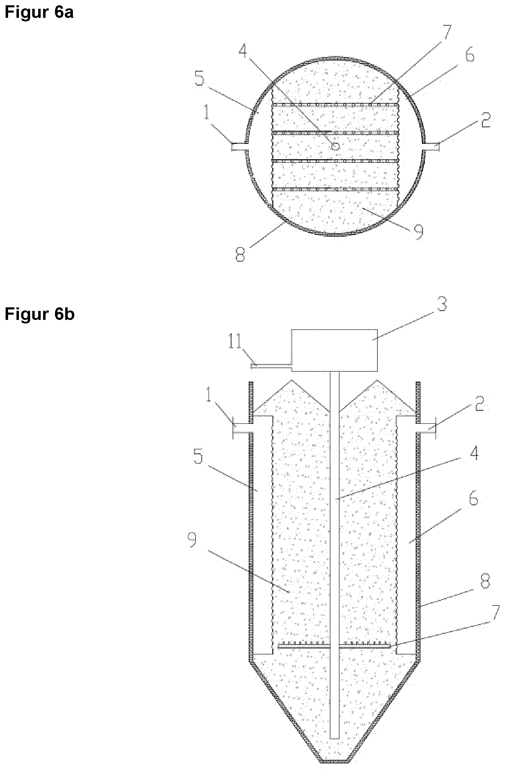

Figuren 6a und 6b zeigen eine sechste Ausführungsform, die auf der fünften Ausführungsform basiert und zusätzlich die optionalen Belüfter 7 aufweist.

Die in den verschiedenen Ausführungsformen dargestellten Alternativen können miteinander kombiniert werden. So kann bei einer nicht dargestellten Ausführungsform nur die Wasserverteilungsvorrichtung 5 als Halbrohre aufgebaut sein, während der Wassersammler 6 im Wesentlichen als Zylindersegment ausgebildet ist oder umgekehrt. Weiter können z.B. zwei näherungsweise parallele Wassereintritts- und Wasseraustrittsflächen auch in einem rechteckigen Beckenkörper 8 realisiert werden.

### Bezugsziffern:

- 1: Wasserzulaufrohr
- 2: Wasserablaufrohr
- 3: Wascheinheit
- 4: Spülmittelrohr
- 5: Wasserverteilungsvorrichtung
- 6: Wassersammler
- 7: Belüfter
- 8: Beckenkörper
- 9: Filterbett
- 10: Überlauf
- 11: Abwasserablauf

## Patentansprüche

1. Parallelfluss-Filterbecken mit
einem Beckenkörper (8), in dem ein Adsorptionsmittel enthaltendes Filterbett (9) vorgesehen ist,
einer Rohwasser-Zulaufbaugruppe mit wenigstens einem Wasserzulaufrohr (1), das mit wenigstens einer zumindest im Wesentlichen vertikal verlaufend im Beckenkörper (8) angeordneten Wasserverteilungsvorrichtung (5) zum Zuführen von Rohwasser in das Filterbett (9) verbunden ist,
einer Ablaufbaugruppe für gefiltertes Wasser mit wenigstens einem Wasserablaufrohr (2), das mit wenigstens einem zumindest im Wesentlichen vertikal verlaufend im Beckenkörpers (8) angeordneten Wassersammler (6) verbunden ist, einer Spülbaugruppe (3) zum Spülen des Filterbetts (9), und
einer Steuerung zur Einstellung der Menge und/oder Fließrichtung einer Fluidströmung durch die Rohwasser-Zulaufbaugruppe, die Ablaufbaugruppe und/oder die Spülbaugruppe,
wobei die Wasserverteilungsvorrichtung (5) zum Zuführen von Rohwasser in das Filterbett (9) und/oder und der Wassersammler (6) an einer Seite des Beckenkörpers (8) angeordnet ist,
**dadurch gekennzeichnet, dass** die Spülbaugruppe wenigstens eine im unteren Bereich des Beckenkörpers (8) angeordnete und in horizontaler Richtung von der Wasserverteilungsvorrichtung (5) und dem Wassersammler (6) beabstandet in das Filterbett (9) mündende Auslassöffnung aufweist, die mit einer Druckluftquelle verbunden ist,
und dass die Steuerung dazu eingerichtet ist, Druckluft kontinuierlich oder intermittierend durch die Auslassöffnung in das Filterbett (9) einzuleiten.

2. Parallelfluss-Filterbecken nach Anspruch 1, **dadurch gekennzeichnet, dass** Aktivkohle das Filterbett (9) bildet.

3. Parallelfluss-Filterbecken nach Anspruch 1 oder 2, **dadurch gekennzeichnet, dass** die Spülbaugruppe ein in dem Beckenkörper (8) angeordnetes und zumindest im Wesentlichen vertikal verlaufendes Spülmittelrohr (4) aufweist, das Auslassöffnungen zumindest im Bereich des unteren Endes des Spülmittelrohrs (4) aufweist.

4. Parallelfluss-Filterbecken nach einem der Ansprüche 1 bis 3, **dadurch gekennzeichnet, dass** die Steuerung dazu eingerichtet ist, in einem Filterbetrieb, Rohwasser über die Wasserverteilungsvorrichtung (5) dem Filterbett (9) zuzuführen und gefiltertes Wasser über den Wassersammler (6) aus dem Filterbett (9) abzuziehen.

5. Parallelfluss-Filterbecken nach Anspruch 4, **dadurch gekennzeichnet, dass** die Steuerung dazu eingerichtet ist, dass das Rohwasser-Niveau in dem Filterbetrieb unter dem Niveau des Filterbetts (9) liegt.

6. Parallelfluss-Filterbecken nach einem der vorhergehenden Ansprüche, **dadurch gekennzeichnet, dass** die Steuerung dazu eingerichtet ist, in einem Rückspülbetrieb Wasser über die Wasserverteilungsvorrichtung (5) aus dem Filterbett (9) abzuziehen und/oder über den Wassersammler (6) dem Filterbett (9) Wasser zuzuführen, und/oder dass die Steuerung dazu eingerichtet ist, dass das Wasser-Niveau in dem Rückspülbetrieb über dem Niveau des Filterbetts (9) liegt.

7. Parallelfluss-Filterbecken nach einem der Ansprüche 1 bis 6, **dadurch gekennzeichnet, dass** die Steuerung dazu eingerichtet ist, Druckluft kontinuierlich oder intermittierend durch die Auslassöffnung in das Filterbett (9) einzuleiten, während gleichzeitig Rohwasser über die Wasserverteilungsvorrichtung (5) dem Filterbett (9) zugeführt und/oder gefiltertes Wasser über den Wassersammler (6) aus dem Filterbett (9) abgezogen wird.

8. Parallelfluss-Filterbecken nach einem der Ansprüche 1 bis 6, **dadurch gekennzeichnet, dass** die Steuerung dazu eingerichtet ist, Druckluft kontinuierlich oder intermittierend durch die Auslassöffnung in das Filterbett (9) einzuleiten, ohne dass gleichzeitig Rohwasser über die Wasserverteilungsvorrichtung (5) dem Filterbett (9) zugeführt und ohne dass gefiltertes Wasser über den Wassersammler (6) aus dem Filterbett (9) abgezogen wird.

9. Parallelfluss-Filterbecken nach einem der vorhergehenden Ansprüche, **dadurch gekennzeichnet, dass** die Wasserverteilungsvorrichtung (5) und/oder der Wassersammler (6) eine Siebplatte, ein perforiertes Rohr, ein Spaltsieb oder jegliche Kombination aus der Siebplatte, dem perforierten Rohr und dem Spaltsieb gebildet wird.

10. Parallelfluss-Filterbecken nach einem der vorhergehenden Ansprüche, **dadurch gekennzeichnet, dass** ferner eine Wascheinheit (3) vorgesehen ist, die dazu eingerichtet ist, Adsorptionsmittel zu waschen, von Wasser zu trennen und/oder dem Filterbett (9) zuzuführen.

11. Parallelfluss-Filterbecken nach einem der vorhergehenden Ansprüche, **dadurch gekennzeichnet, dass** ein unterer Bereich des einem Beckenkörpers (8) sich nach unten z.B. konisch verjüngt, wobei die wenigstens eine die Auslassöffnung in dem konisch verjüngten Bereich angeordnet ist.

12. Parallelfluss-Filterbecken nach einem der vorhergehenden Ansprüche, **dadurch gekennzeichnet, dass** der Beckenkörper (8) eine im Wesentlichen rechteckige Grundform miteinander gegenüberliegenden Seitenwänden aufweist, wobei eine oder mehrere Wasserverteilungsvorrichtungen (5) und eine oder mehrere Wassersammler (6) aneinander gegenüberliegenden Seitenwänden vorgesehen sind.

13. Parallelfluss-Filterbecken nach einem der Ansprüche 1 bis 12, **dadurch gekennzeichnet, dass** der Beckenkörper (8) eine im Wesentlichen zylindrische Grundform aufweist, wobei eine oder mehrere Wasserverteilungsvorrichtungen (5) und eine oder mehrere Wassersammler (6) aneinander gegenüberliegenden Zylindersegmenten vorgesehen sind.

14. Parallelfluss-Filterbecken nach einem der Ansprüche 1 bis 11, **dadurch gekennzeichnet, dass** eine Wasserverteilungsvorrichtung (5) oder ein Wassersammler (6) von Seitenwänden des Beckenkörpers (8) beabstandet, beispielsweise zentral in dem Beckenkörper (8), vorgesehen ist.

15. Parallelfluss-Filterbecken nach einem der vorhergehenden Ansprüche, **dadurch gekennzeichnet, dass** zusätzlich ein Sammeltank für Spülwasser und/oder für aus dem Rohwasser abgetrennte Partikel vorgesehen ist und/oder dass zusätzlich ein Belüfter (7) vorgesehen ist.
